# EUROPÄISCHE PATENTSCHRIFT

(11) **EP 2 467 540 B1**
(45) Veröffentlichungstag und Bekanntmachung des Hinweises auf die Patenterteilung: **14.10.2015**
(21) Anmeldenummer: 10757173.9
(22) Anmeldetag: 20.08.2010
(51) Int. Cl.: E03F 5/20, G05D 9/02

(54) **KRAFTSCHLUSSBECKEN**
GRAVITY-FED BASIN
BASSIN ALIMENTÉ PAR GRAVITÉ

(30) Priorität: 21.08.2009 EP 09168355
(43) Veröffentlichungstag der Anmeldung: 27.06.2012
(73) Patentinhaber: Siemens Aktiengesellschaft, 80333 München (DE)
(72) Erfinder: SCHUBERT, Falko, 91301 Forchheim (DE); SCHÄFERLEIN, Hubert, 91315 Höchstadt (DE)
(86) Internationale Anmeldenummer: PCT/EP2010/062142
(87) Internationale Veröffentlichungsnummer: WO 2011/020905

(56) Entgegenhaltungen:
- EP-A- 1 693 094
- DE-A1- 3 103 306
- GB-A- 699 491

## Beschreibung

Die vorliegende Erfindung betrifft eine Vorrichtung zum Ableiten von Brauchwasser, insbesondere von Kühlwasser einer Kraftwerksanlage, in einen Vorfluter.

Bei mit Frischwasser gekühlten Kraftwerken wird das Brauchwasser aus betrieblichen Gründen über ein Kraftschlussbecken in einen Vorfluter abgeleitet. Unter einem Vorfluter versteht man ein stehendes oder fließendes Gewässer, in welches die Ableitung des Brauchwassers erfolgt.

Die GB 699 491 A offenbart eine Regelvorrichtung, die als Bypass in einem Wasserkraftwerk Verwendung finden soll. Durch die vorgeschlagene Regelvorrichtung soll ein konstanter Brauchwasserspiegel bei variierenden Brauchwasserförderrnengen in ein Kraftschlussbecken einstellbar sein. Dazu ist ein Drosselorgan axial mit einem Schwimmkörper auf dem Brauchwasserspiegel verbunden, sodass das Drosselorgan geöffnet wird, wenn der Brauchwasserspiegel steigt und Brauchwasser kraftschlüssig in einen Vorfluter abgeleitet wird. Für ein schnelles Ausregeln des Brauchwasserspiegels ist jedoch das Drosselorgan alleine zu träge. Je nach Kraftwerkstyp beträgt die Durchsatzmenge an Brauchwasser durch ein Kraftschlussbecken in Abhängigkeit von der erlaubten Aufwärmspanne des Brauchwassers etwa 5 bis 10 m³ pro Sekunde. Die Regelvorrichtung ist zudem nicht in der Lage, Schwankungen in der Brauchwasserfördermenge aufzufangen, sodass Schwankungen im Wasserspiegel des Vorfluters vermieden werden. Schwankungen im Wasserspiegel des.Vorfluters können für einen kraftschlüssigen Betrieb des Kraftschlussbeckens problematisch sein. Zu Schwankungen kommt es insbesondere dadurch, dass geregelte Pumpen, oder mehrere Pumpen auf ein Kraftschlussbecken fördern.

Starken Schwankungen des Brauchwasserspiegels kann durch die Vorsehung von Überfallschwellen entgegen getreten werden. Dazu umfasst das Kraftschlussbecken im Wesentlichen ein Wasserbecken mit einer Schwelle, über die das Brauchwasser in den Vorfluter eingeleitet wird. Nur dann, wenn der Wasserstand die Schwellenhöhe übersteigt, erfolgt ein Abführen von Brauchwasser in den Vorfluter. In Abhängigkeit von Schwankungen des Wasserspiegels des Vorfluters fällt das über die Schwelle strömende Brauchwasser etliche Meter in die Tiefe, um sich mit dem Wasser des Vorfluters zu vermischen. Die Schwelle kann als lineare Schwelle oder beispielsweise von der Oberkante eines vom Boden des Wasserbeckens in die Höhe stehenden Fallzylinders gebildet sein, wie dies beispielsweise in der DE 31 03 306 beschrieben ist.

Der in DE 31 03 306 beschrieben Fallzylinder dient der Ableitung von Abwässern, z.B. aus einer Kraftwerksanlage, durch ein Kraftschlussbecken in ein Oberflächengewässer. In dem Fallzylinder sind dabei mehrere vertikal ausgerichtete Leitbleche vorgesehen, durch die der Lufteintrag in das Brauchwasser erhöht werden soll, sodass das abzuleitende Brauchwasser mit Sauerstoff angereichert wird.

Selbst wenn keine Maßnahmen zum Zuführen von Luft in das Brauchwasser vorgesehen sind, kommt es beim Fallen des Wassers in die Tiefe zu einem hohen Lufteintrag, der je nach Wasserqualität zu einer mehr oder weniger starken Schaumbildung führt. Dieser Lufteintrag bzw. die Schaumbildung ist in der Regel sowohl von Behörden als auch von Anrainern unerwünscht.

Unter besonderen Umständen besteht auch die Gefahr einer Bildung von stabilem Schaum, welcher zudem zu erheblichen Betriebsbeeinträchtigungen führen kann.

Während der Inbetriebsetzung eines Kraftschlussbeckens werden daher in der Regel Maßnahmen ausprobiert und getestet, die dazu dienen den Lufteintrag bzw. die Schaumbildung zu verringern. Derartige Maßnahmen können etwa temporäre Abdeckungen, das Einspeisen von Chemikalien oder Entlüftungs-bzw. Rohrsysteme umfassen. Insbesondere letzteres kann enorme Zusatzkosten verursachen. Auch kann dabei auf Einbauten zurückgegriffen werden, die auf verschiedenen Prinzipien beruhen.

Zur Verringerung von Schaumbildung schlägt die EP 1 693 094 welche die Merkmale des Oberbegriffs von Anspruch 1 offenbart, einen besonders ausgebildeten zylindrischen Fallzylinder vor. Schaumbildung soll demnach dadurch vermeiden werden, dass die Austrittsöffnung des Fallzylinders unterhalb des Flüssigkeitsspiegels des Vorfluters angeordnet ist, und weiterhin in dem Fallzylinder horizontal angeordnete Blenden als Strömungswiderstand angeordnet sind. Derartige Einbauten lassen sich dabei jedoch nur auf bestimmte Wasserstandsbereiche hin optimieren. Bei schwankenden Brauchwasserfördermengen bestehen durch feste Einbauten Risiken für Fehlfunktionen. Außerdem benötigen insbesondere die Kraftschlussbecken mit diversen Einbauten zum Teil eine vergleichsweise große Baufläche.

Bei der Verwendung eines Fallzylinders besteht zudem die Gefahr einer Strudelbildung, die durch einen Drall des in den Fallzylinder einströmenden Wassers hervor gerufen wird. Ein Drall führt in der Regel zu Wirbeln im strömenden Wasser, welche wiederum zu einem erhöhten Lufteintrag führen.

Aufgabe der vorliegenden Erfindung ist es daher, ein im Vergleich zum Stand der Technik vorteilhaftes Kraftschlussbecken zur Verfügung zu stellen, welches auch bei schwankenden Brauchwasser-Fördermengen einen kraftschlüssigen Betrieb bei gleichzeitig minimaler Schaumbildung gewährleistet.

Diese Aufgabe wird gelöst durch eine Vorrichtung zum Ableiten von Brauchwasser in einen Vorfluter nach Anspruch 1. Die abhängigen Ansprüche enthalten vorteilhafte Ausgestaltungen der erfindungsgemäßen Vorrichtung.

Eine erfindungsgemäße Vorrichtung zum Ableiten von Brauchwasser in einen Vorfluter umfasst ein Kraftschlussbecken mit einem Fallzylinder, der eine Einlauföffnung und eine Auslauföffnung aufweist. Dabei bildet die Einlauföffnung eine Überfallschwelle. In der erfindungsgemäßen Vorrichtung ist im Inneren des Fallzylinders ein mit einem Schwimmer über eine Führungsstange verbundenes Drosselorgan. Die Vorrichtung kann insbesondere zum Ableiten von Kühlwasser einer Kraftwerksanlage ausgebildet sein. Zudem sind zwischen Kraftschlussbecken und dem Fallzylinder vertikale Drallbleche angeordnet.

Die Erfindung geht dabei von dem Gedanken aus, die Vorteile einer Vorrichtung eines Kraftschlussbeckens mit einer kompakten Bauweise zu nutzen, und zudem die Vorrichtung für konstante und stark schwankende Brauchwasser-Fördermengen zu ertüchtigen. Dazu ist in dem Kraftschlussbecken ein Fallzylinder vorgesehen, der eine verstellbare Ablaufdrosselvorrichtung aufweist.

Im Betrieb wird das Drosselorgan der Ablaufdrosselvorrichtung über die Führungsstange durch den Schwimmer betätigt. Durch die Ablaufdrosselvorrichtung werden einerseits schwankende, Wassermassenströme im Zulauf, sowie ein schwankender Wasserspiegel im Vorfluter ausgeglichen. Bei steigendem Wassermassenstrom im Zulauf erfährt der Schwimmer wie eine Boje einen Auftrieb und betätigt über die Führungsstange das Drosselorgan, welches das Wasser kraftschlüssig in den Vorfluter ableitet. Bei sinkendem Wasserinassenstrom im Zulauf sinkt auch der Wasserstand im Kraftschlussbecken und das Drosselorgan wird durch den Schwimmer angedrosselt, bzw. geschlossen. Bei steigendem oder fallendem Wasserspiegel im Vorfluter verhält sich die Ablaufdrosselvorrichtung analog. Die erfindungsgemäße Vorrichtung zum Ableiten von Brauchwasser in einen Vorfluter gewährleistet somit einen kraftschlüssigen Betrieb für eine sehr große Bandbreite an variablen Brauchwasser-Massenströmen. Dadurch wird auch bei stark schwankenden Brauchwasser-Fördermengen Schaumbildung durch Lufteintrag vermieden.

Zudem ist zwischen dem Kraftschlussbecken und dem Fallzylinder eine Anzahl von vertikalen Drallblechen angeordnet. Die Drallbleche oder auch Drallplatten reduzieren den Drall des zuströmenden Kühlwassers, und vermeiden dadurch weitgehend eine Strudelbildung im Fallzylinder. Um den Umfang des Fallzylinders kann dazu eine Anzahl an Drallblechen vorgesehen sein. Dem Drallblech kommt die Aufgabe zu, einem Drall beim Einströmen des Wassers in den Fallzylinder entgegenzuwirken.

Um dem Lufteintrag und damit einer Schaumbildung entgegenzuwirken kann alternativ zu den Drallblechen in einer nicht beanspruchten Ausführungsform im Bereich der Einlauföffnung des Fallzylinders auch ein drallbrechendes Element, insbesondere ein Drallkreuz, angeordnet sein.

Im Vergleich zu Kraftschlussbecken mit linearer Schwelle benötigt das erfindungsgemäße Kraftschlussbecken deutlich weniger bebaute Fläche. Der umbaute Raum kann im Vergleich zu den Kraftschlussbecken mit linearer Schwelle um ca. 40% reduziert werden. Gegenüber Kraftschlussbecken mit Einbauten lassen sind durch die erfindungsgemäße Vorrichtung kostenintensive Baumaßnahmen vermeiden.

Ein Kraftschlussbecken kann auch derart ausgestaltet sein, dass eine Nachrüstung mit der Erfindungsgemäßen Vorrichtung zum Ableiten von Brauchwasser in einen Vorfluter im späteren Betrieb der Kraftwerksanlage nachgerüstet werden kann, falls in der Planungsphase oder zu Baubeginn Unklarheit über den Umfang des zu fördernden Brauchwassers besteht.

In einer vorteilhaften Ausgestaltung der Vorrichtung zum Ableiten von Brauchwasser in einen Vorfluter weist das Drosselorgan ein an der Auslauföffnung feststehendes Element und ein zu dem feststehenden Element ein mit der Führungsstange verbundenes bewegliches Element auf. Die Führungsstange ist mit dem Schwimmer verbunden. Im Betrieb des Kraftschulussbeckens bewegt sich der Schwimmer in Abhängigkeit der Brauchwasserfördermenge, und bewirkt eine Verstellung des beweglichen Elements des Drösselorgans. Dadurch ist auch bei schwankenden Brauchwasserfördermengen eine Schaumbildung weitgehend minimiert.

Besonders gute Resultate lassen sich erzielen, wenn das feststehende Element des Drosselorgans ringförmige oder langlochförmige Ablauföffnungen aufweist. Durch diese Art der Öffnungen ist eine ausreichende Stabilität des Bauteils bei zugleich effizienter Durchleitung des Kühlwassers gewährleistet. Ebenso sind aber auch andere Formen wie schlitzartige Öffnungen oder eine Ausgestaltung des feststehenden Elements als Gitter denkbar.

Aufgrund der großen Dimension der Vorrichtung erweist es sich als vorteilhaft zwischen dem feststehenden Element und dem Beweglichen Element des Drosselorgans ein ausreichendes Spiel vorzusehend, so dass ein Verklemmen durch eine mögliche, leicht geneigte Führung des Beweglichen Elements relativ zum feststehenden Element, vermieden ist. Auf Dichtungen kann verzichtet werden. Es ist sogar vorteilhaft, gezielt Bohrungen oder Öffnungen vorzusehen, so dass auch bei geschlossenem Drosselorgan ein Minimaldurchsatz an Kühlwassermassenstrom gegeben ist.

Weiterhin weist das Kraftschlussbecken einen über der Überfallschwelle angeordneten Überflutungsauslass auf. Dadurch ist vermieden, dass es bei zu hohen Fördermengen oder starken Fördermengenschwänkungen zu einem unkontrollierten Überlauf bzw. zu einem Rückstau kommt.

In einer besonderen Weiterbildung weist das Kraftschlussbecken ein Sicherungselement auf, durch das die Führungsstange in ihrer Bewegung vertikal zentriert ist. Von Vorteil ist das Sicherungselement vor allem dann, wenn auf Führungselemente der Führungsstange innerhalb des Fallzylinders verzichtet wird. Das Sicherungselement vermeidet ein Umfallen des Bauteils und insbesondere ein Verklemmen des beweglichen Elements mit dem Feststehenden Element des Drosselorgans.

In einer vorteilhaften Ausgestaltung befindet sich die Auslauföffnung des Fallzylinders unterhalb des Flüssigkeitsspiegels des Vorfluters. Dadurch ist ein Lufteintrag seitens des Vorfluters in den Fallzylinder vermieden. Je nach Anforderungen bzw. den gegebenen Randbedingungen kann es jedoch auch notwendig sein, eine Anordnung der Auslauföffnung des Fallzylinders oberhalb des Vorfluters zuzulassen.

In den Figuren 1 bis 4 wird die Erfindung anhand von Ausführungsbeispielen erläutert. Es zeigt:
- FIG 1: Eine Vorrichtung zum Ableiten von Brauchwasser in einen Vorfluter mit Schwimmer und Drosselorgan in einer geschnittenen Seitenansicht.
- FIG 2: Eine Vorrichtung zum Ableiten von Brauchwasser in einen Vorfluter mit Schwimmer und Drosselorgan in einer geschnittenen Draufsicht.
- FIG 3: Ein Drosselorgan in einer geschnittenen Seitenansicht.
- FIG 4: Ein Drosselorgan in einer geschnittenen Draufsicht.
- FIG 5: Eine Baugruppe aus Drosselorgan, Führungsstange, Schwimmer und Sicherungselement.

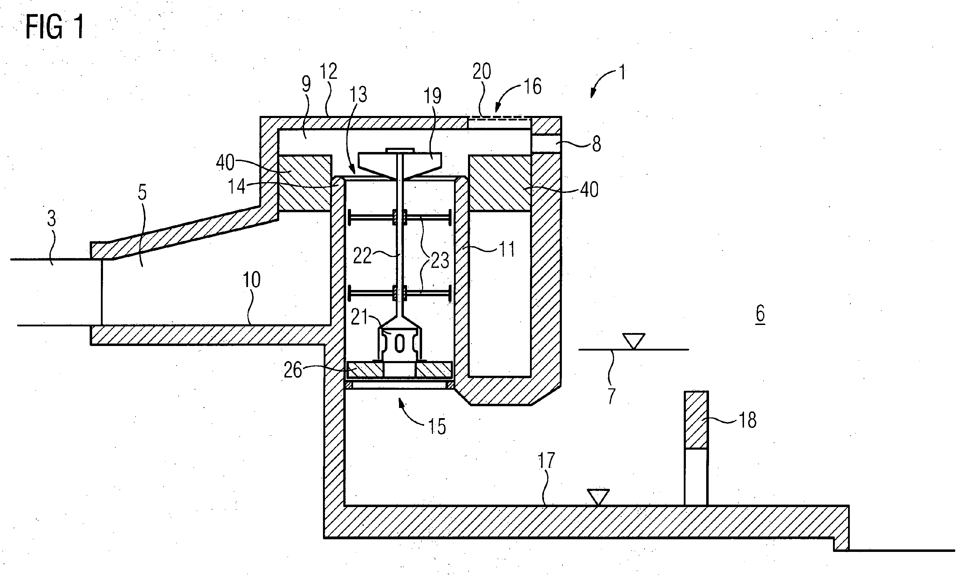

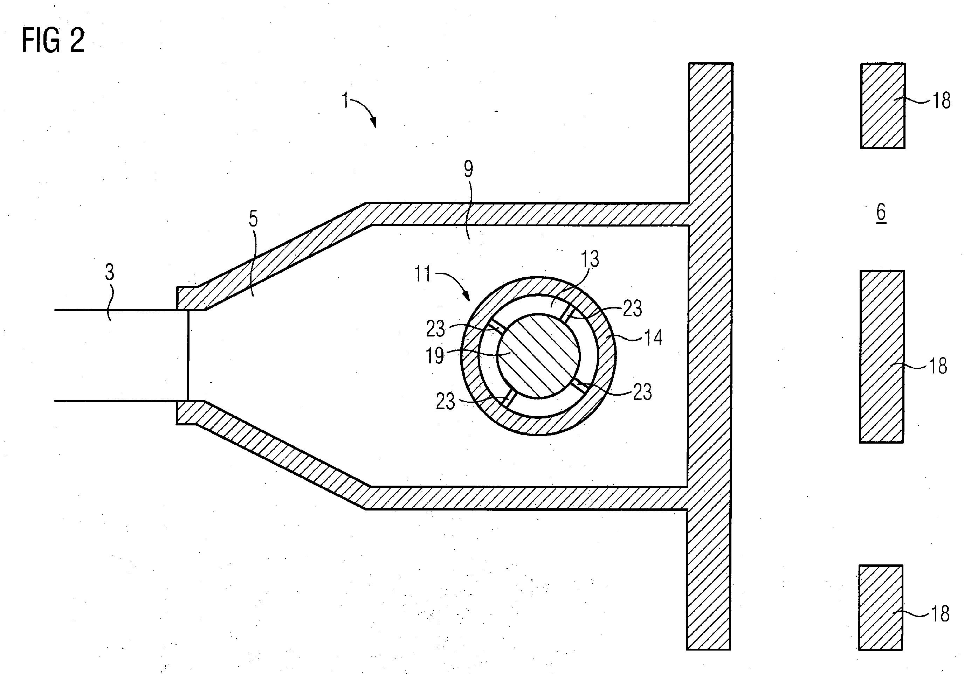

Figur 1 und 2 zeigen eine Vorrichtung zum Ableiten von Brauchwasser in einen Vorfluter 6. Figur 1 zeigt die Vorrichtung in einem vertikalen Schnitt, während Figur 2 die Vorrichtung in einem horizontalen Schnitt in Draufsicht zeigt.

Die Vorrichtung zum Ableiten von Brauchwasser in einen Vorfluter 6 umfasst um wesentlichen ein Kraftschlussbecken 1.

Das Kraftschlussbecken 1 ist an eine Zulaufleitung 3 angeschlossen, durch die dem Kraftschlussbecken 1 Brauchwasser, beispielsweise Kühlwasser einer Kraftwerksanlage, zuströmt. Das Kraftschlussbecken 1 steht außerdem strömungstechnisch mit dem Vorfluter 6 im Kontakt, dessen Wasserstand durch die Linie 7 angedeutet ist und in den das Brauchwasser eingeleitet wird.

Das Kraftschlussbecken 1 umfasst eine Aufweitungskammer 5, ein Wasserbecken 9, das mit einer Abdeckplatte 12 abgedeckt ist, und einen Fallzylinder 11, dessen Einlauföffnung 13 mit Abstand über dem Boden 10 des Wasserbeckens 9 angeordnet ist. Die Auslauföffnung 15 des Fallzylinders 11 befindet sich unterhalb der Wasserstandslinie 7 des Vorfluters 6. Mit Abstand zur Auslauföffnung 15 ist eine Bodenplatte 17 vorhanden, von der aus mehrere Prallplatten 18 in die Höhe stehen. Die Austrittsgeschwindigkeit des Brauchwassers in den Vorfluter beträgt hinter den Prallplatten 18 weniger alls 0,3 m/s.

Um einen Einstig zur Inspektion zu ermöglichen, ist in der Abdeckplatte 12 eine Einstiegsöffnung 16 vorhanden. Die Einstiegsöffnung 16 ist mit einem Abdeckgitter 20 verschlossen. Das Kraftschlussbecken 1 weist zudem einen Überflutungsauslass 8 auf, der als Überlauf im Sonderfall vor Überflutung des Kraftschlussbeckens 1 schützt.

Der obere Rand des Fallzylinders 11, also die Begrenzung der Einlauföffnung 13, bildet eine Überfallschwelle 14 für das im Wasserbecken 9 befindliche Brauchwasser. Über diese Überfallschwelle 14 strömt das Brauchwasser in den Fallzylinder 11.

Im Inneren des Fallzylinders 11 befindet sich ein Schwimmer 29, der über eine Führungsstange 22 mit einem Drosselorgan 21 verbunden ist. Die Führungsstange 22 wird durch Führungselemente 23 in der Senkrechten geführt.

Zwischen dem Gehäuse des Kraftschlussbeckens 1 und dem Fallzylinder 11 sind um den Umfang mehrere Drallbleche 40 angeordnet. In der Einlauföffnung 13 kann in einer nicht beanspruchten Ausführungsform alternativ zu den Drallblechen 40 ein Drallkreuz angeordnet sein, welches die Ausbildung eines Wirbels im durch den Fallzylinder 11 strömenden Brauchwasser verhindern soll.

Das Drosselorgan 21 bildet einen Strömungswiderstand, der zu einem Wasserstau führt, welcher die Strömungsgeschwindigkeit des Brauchwassers im Fallzylinder 11 derart herabsetzt, dass die sogenannte charakteristische Separationsgeschwindigkeit erreicht oder unterschritten wird. Bei einer Strömungsgeschwindigkeit die kleiner oder gleich der charakteristischen Separationsgeschwindigkeit ist, können sich die Luftblasen und das Wasser entmischen, sodass die Luftblasen im Fallzylinder 11 aufsteigen und die Wasseroberfläche erreichen können. Im Bereich der Auslauföffnung 15 ist daher der Luftgehalt des Brauchwassers im Vergleich zu einem Fallzylinder ohne verstellbares Drosselorgan 21 vermindert.

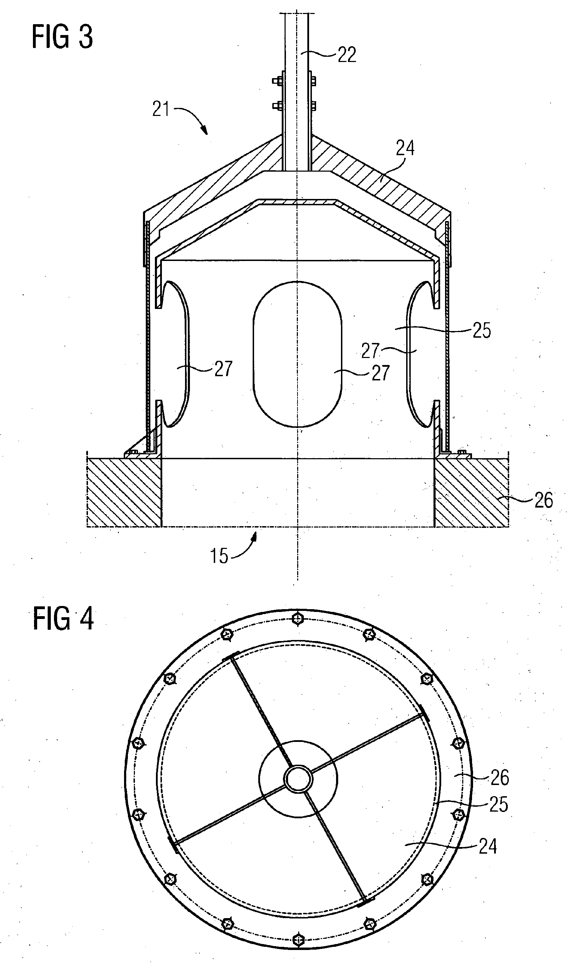

Eine Mögliche Drosselorganform ist in den Figuren 3 und 4 dargestellt. Figur 3 zeigt ein Drosselorgan 21 in einer seitlichen Schnittansicht, Figur 4 ein Drosselorgan 21 in Draufsicht.

Das Drosselorgan 21 besteht aus einem beweglichen Element 24 und einem feststehenden Element 25. Das bewegliche Element 24 hat eine glockenartige Gestalt und ist mit der Führungsstange 22 verbunden. Das bewegliche Element 24 ist durch in der vertikalen zum feststehenden Element 25 beweglich. Das feststehende Element 25 weist Öffnungen 27 auf, und ist mit einem Bodenelement 26 verbunden, welches den Fallzylinder 11 nach unten hin begrenzt. Im Bereich des feststehenden Elements 25 weist das Bodenelement 26 eine Aussparung auf, welche die Auslauföffnung 15 bildet.

Ist das bewegliche Element 24 ganz über das feststehende Element 25 gefahren; ist das Drosselorgan 21 vollständig geschlossen. Wird das bewegliche Element 25 durch den Schwimmer 19 nach oben gezogen, werden die Öffnungen 27 des feststehenden Elementes 24 ganz oder teilweise geöffnet, und Brauchwasser kann ausströmen.

Weitere Formen des Drosselorgans 21 sind denkbar. Durch Wahl geeigneter Dimensionen und Formen des Drosselorgans 21 kann der Lufteintrag in das durch den Fallzylinder 11 fallende Brauchwasser minimiert werden. Das Optimieren der Form und Dimensionen des Drosselorgans kann empirisch erfolgen.

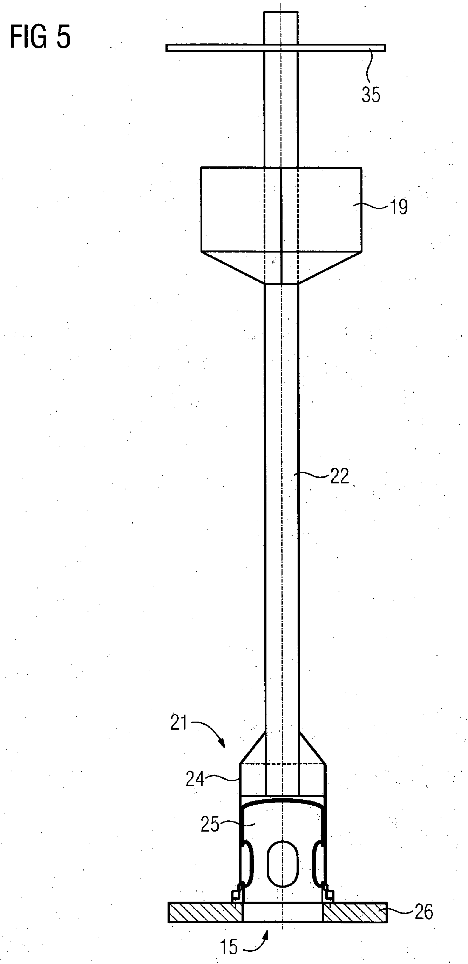

Figur 5 zeigt eine Seitenansicht einer Baugruppe aus Drosselorgan 21, Führungsstange 22, Schwimmer 19 und Sicherungselement 35. Die Baugruppe ist innerhalb des Fallzylinder angeordnet. In dieser Darstellung ist die Führungsstange nicht durch Führungselemente in dem Fallzylinder 11 gesichert. Im Betrieb, als bei mit Wasser gefülltem Fallzylinder wird die Führungsstange 22 durch den Auftrieb des Schwimmers 19 vertikal zentriert. Um jedoch bei besonderen Betriebszuständen, z.B. beim Anfahren der Kraftwerksanlage oder bei starken Schwankungen im Kühlwasserstrom, ein Verklemmen des feststehenden Elements 24 mit dem beweglichen Elements 25 des Drosselorgans 21 zu vermeiden, ist das Sicherungselement 35 vorgesehen, welches die Führungsstange 22 vertikal zentriert. Das Sicherungselement 35 ist mit dem Gehäuse des Kraftschlussbeckens verbunden und weist eine Öffnung oder eine Führung auf, in der die Führungsstange vertikal geführt wird.

## Patentansprüche

1. Vorrichtung zum Ableiten von Brauchwasser in einen Vorfluter (6), umfassend ein Kraftschlussbecken (1) mit einem Fallzylinder (11), der eine Einlauföffnung (13) und eine Auslauföffnung (15) aufweist, wobei die Einlauföffnung (13) eine Überfallschwelle (14) bildet
**dadurch gekennzeichnet,**
**dass** im Inneren des Fallzylinders (11) ein mit einem Schwimmer (19) über eine Führungsstange (22) verbundenes Drosselorgan (21) angeordnet ist, dass zwischen Kraftschlussbecken (1) und Fallzylinder (11) vertikale Drallbleche (40) angeordnet sind, und dass das Kraftschlussbecken (1) einen über der Überfallschwelle (14) angeordneten Überflutungsauslass (8) aufweist.

2. Vorrichtung nach Anspruch 1, **dadurch gekennzeichnet, dass** das Drosselorgan (21) aus einem an der Auslauföffnung (15) feststehenden Element (25) und einem zu dem feststehenden Element (25) ein mit der Führungsstange (22) verbundenes bewegliches Element (24) aufweist.

3. Vorrichtung nach Anspruch 2, **dadurch gekennzeichnet, dass** das in dem feststehenden Element (25) des Drosselorgans (21) ringförmige Ablauföffnungen (27) angeordnet sind.

4. Vorrichtung nach einem der Ansprüche 1 bis 3, **dadurch gekennzeichnet, dass** das Kraftschlussbecken (1) ein Sicherungselement (22) aufweist, durch das die Führungsstange (22) vertikal zentriert ist.

5. Vorrichtung nach einem der Ansprüche 1 bis 4, **dadurch gekennzeichnet, dass** sich die Auslauföffnung (15) des Fallzylinders (11) unterhalb des Flüssigkeitsspiegels (7) des Vorfluters (6) angeordnet ist.

## Claims

1. Device for discharging industrial water into a receiving body of water (6), comprising a gravity-fed basin (1) with a gravity cylinder (11) having an inlet opening (13) and an outlet opening (15) wherein the inlet opening (13) forms an overflow crest (14),
**characterised in that**
a throttle member (21) connected to a float gauge (19) via a guide rod (22) is arranged inside the gravity cylinder (11) and vertical swirl plates (40) are arranged between gravity-fed basin (1) and gravity cylinder (11), and that the gravity-fed basin (1) has a flooding outlet (8) arranged above the overflow crest (14).

2. Device according to claim 1, **characterised in that** the throttle member (21) consists of a fixed element (25) at the outlet opening (15) and a movable element (24) connected to the fixed element (25) with the guide rod (22).

3. Device according to claim 2, **characterised in that** annular outlet openings (27) are arranged in the fixed element (25) of the throttle member (21).

4. Device according to one of claims 1 to 3, **characterised in that** the gravity-fed basin (1) has a safety element (22) through which the guide rod (22) is centred vertically.

5. Device according to one of claims 1 to 4, **characterised in that** the outlet opening (15) of the gravity cylinder (11) is arranged below the liquid level (7) of the receiving body of water (6).

## Revendications

1. Dispositif pour évacuer de l'eau industrielle dans un évacuateur ( 6 ), comprenant un bassin ( 1 ) alimenté par gravité et ayant un cylindre ( 11 ) de chute, qui a une ouverture ( 13 ) d'entrée et une ouverture ( 15 ) de sortie, l'ouverture ( 13 ) d'entrée formant un seuil ( 14 ) de trop-plein,
**caractérisé**
**en ce que**, à l'intérieur du cylindre ( 11 ) de chute, est disposé un organe ( 21 ) d'étranglement relié à un flotteur ( 19 ) par une tige ( 22 ) de guidage, en ce que des tôles ( 40 ) verticales de tourbillonnement sont disposées entre le bassin ( 1 ) alimenté par gravité et le cylindre ( 11 ) de chute et en ce que le bassin ( 1 ) alimenté par gravité a une sortie ( 8 ) de débordement disposée au-dessus du seuil ( 14 ) de trop-plein.

2. Dispositif suivant la revendication 1, **caractérisé en ce que** l'organe ( 21 ) d'étranglement est composé d'un élément ( 25 ) fixe à l'ouverture ( 15 ) de sortie et d'un élément ( 24 ) mobile relié à l'élément ( 25 ) fixe par la tige ( 22 ) de guidage.

3. Dispositif suivant la revendication 2, **caractérisé en ce que** des ouvertures ( 27 ) d'évacuation sont disposées annulairement dans l'élément ( 25 ) fixe de l'organe ( 21 ) d'étranglement.

4. Dispositif suivant l'une des revendications 1 à 3, **caractérisé en ce que** le bassin ( 1 ) alimenté par gravité a un élément ( 22 ) d'assujettissement, par lequel la tige ( 22 ) de guidage est centrée verticalement.

5. Dispositif suivant l'une des revendications 1 à 4, **caractérisé en ce que** l'ouverture ( 15 ) de sortie du cylindre ( 11 ) de chute est disposée en dessous du niveau ( 7 ) du liquide de l'évacuateur ( 6 ).
